Europäisches Patentamt

European Patent Office

Office européen des brevets

(11) Publication number: **0 410 599 A2**

# EUROPEAN PATENT APPLICATION

(21) Application number: 90307371.6

(22) Date of filing: 05.07.90

(51) Int. Cl.5: **B29C 51/14**, B29C 51/00, B29C 67/14

(30) Priority: 24.07.89 GB 8916909

(43) Date of publication of application:
30.01.91 Bulletin 91/05

(84) Designated Contracting States:
DE ES FR GB IT NL SE

(71) Applicant: IMPERIAL CHEMICAL INDUSTRIES
PLC
Imperial Chemical House, Millbank
London SW1P 3JF(GB)

(72) Inventor: Summersgill, Philip
15 Ripon Road
Redcar, Cleveland(GB)
Inventor: Cattanach, James Buchan
Granary Cottage, Maxpoffle
St Boswells, Roxburghshire, TD6 0HP(GB)

(74) Representative: Graham, John George et al
Legal Department Patents Imperial Chemical
Industries PLC PO Box 6 Bessemer Road
Welwyn Garden City Hertfordshire AL7
1HD(GB)

(54) Method of forming thermoformable composite material.

(57) In a method of forming a body of thermoformable composite material using two shaping diaphragms against the shaping surface of a tool, the diaphragms are selected to be of different stiffness. Improvements in the control of the uniformity of thickness and/or buckling can be achieved depending upon which of the diaphragms is stiffer relative to the tool side of the assembly being formed.

Fig. 1.

# METHOD OF FORMING THERMOFORMABLE COMPOSITE MATERIAL

This invention relates to a method of forming thermoformable composite material, particularly to a method of forming thermoformable composites containing continuous reinforcing filaments.

Methods of impregnating continuous, usually collimated, fibres with polymeric materials, particularly thermoplastics, to form composite materials having high fibre to polymer ratios have been devised thereby enabling the exceptionally good physical properties of the reinforcing fibres, for example glass or carbon fibres, to be fully utilised in the composite materials (eg see EP-B-0056703 and EP-B-102159). Such composite products can be produced as continuous profiles by appropriate profiling of the impregnated product, but are generally produced as prepregs of flat tapes or sheets which are subsequently laid up and consolidated into flat structures having multi-directional reinforcement to provide quasi-isotropic reinforcement in the plane of the structure. Such consolidated structures have exceptional strength and stiffness but, owing to the nature of the continuous fibre reinforcement, are difficult to fabricate into shaped articles in processes having shaping steps in which the laid-up prepregs are subjected to elongation or compression.

To overcome such difficulties, the use of auxiliary sheet material which is itself capable of being plastically deformed at elevated temperatures in conjunction with the laid-up prepregs has been adopted. In that method, the sheet material is urged against at least one face of the body, ie the laid-up prepregs (either consolidated or unconsolidated), whilst the assembly so formed is at a temperature at which the sheet is plastically deformable and the body will conform to the shape of the sheet. The sheet is then plastically deformed so as to form the body into the desired shape. The term commonly adopted for such shaping sheets is "diaphragm". Normally, two diaphragms are used conjointly, one to contact each side of a body.

The diaphragms can, for example, be in the form of a suitably deformable metal. Thus EP-B-0155820 discloses a method of forming such composites in which fluid pressure is applied to a diaphragm of plastically deformable metal to urge a body of composite into a required shape. Preferably the metal is a superplastically deformable metal. A method of shaping composite material using diaphragms of polymeric material is described in EP-A-195562. Usually, the body of composite material is sandwiched between two diaphragms to form an assembly for use in the forming process.

Whilst the forming of composites using such diaphragms has been relatively successful, some problems have been experienced in forming the assembly, ie the body of composite and the diaphragm(s), against a mould surface. For example, the thickness of the shaped composite can vary considerably across a section through the shaped composite; and relatively severe buckling, ie out-of-plane wrinkling and fibre displacement, can occur particularly at radii in the shaped body.

It is an object of the present invention to reduce or obviate at least one of the aforementioned disadvantages.

According to the invention, a method of forming a body of thermoformable material containing continuous filaments comprises making a thermoformable assembly of the body and two shaping diaphragms, one located on each side of the body, heating the assembly to a suitable thermoforming temperature, forming the assembly by urging the assembly into contact with a shaping surface of a shaping tool and removing the resultant shaped body from the tool, one of the diaphragms being stiffer than the other of the diaphragms.

In the first embodiment of the invention, the Applicants have found that, by making the diaphragm adjacent to the tool stiffer than the diaphragm remote from the tool an improvement in the uniformity of the thickness of the shaped body results.

In a second embodiment of the invention, the Applicants have found that, by making the diaphragm remote from the tool stiffer than the diaphragm adjacent to the tool, the occurrence of buckling in the shaped body is reduced.

In addition to the improvement in the uniformity of the thickness of the shaped body achieved using the first embodiment, a reduction in buckling is obtainable by increasing the absolute stiffness of the diaphragms used (ie by making the diaphragm remote from the tool stiffer whilst maintaining the difference in stiffness between the diaphragms).

Furthermore, a reduction in the displacement particularly in the surface layers of the thermoformable body is achievable by interposing a loose ply, eg of polymeric material the same as the polymeric materials usable for the diaphragms, between one, or preferably both, of the diaphragms and the thermoformable body.

The diaphragms can be of metal or polymeric materials as described in EP-B-0155820 and EP-A-0195561. When the material is metal, preferably the metal is a superplastically deformable metal. When the material is polymeric material, it can be of any suitable polymeric material; for example it can be a material

2

disclosed in EP-A-0195561. Suitable polymers are, for example, polyetheretherketones, polyetherethersulphones, polyimides, polypropylenes (or other polymeric alphaolefines) and polyamides.

Combinations of the materials used for the pair of diaphragms are metal/metal, metal/polymer and polymer/polymer. The difference in stiffness between the diaphragms can be achieved for example by selecting materials for the diaphragms of different tensile moduli; or of similar tensile moduli but of different thickness.

The forming step involves the shaping of two materials, ie the diaphragm material and the composite, exhibiting very different visco/elastic deformation modes at the forming temperature. The diaphragms should normally exhibit a large element of elastic behaviour (eg strain hardening) whilst viscous flow in the matrix material facilities intraply slip and intraply reorganisation. The elastic behaviour of the diaphragms thus dominates the viscous flow of the matrix materials.

When the material of one or both of the diaphragms is polymeric, it will normally have a minimum forming temperature above that of the polymer of thermoformable body so that the resistance to deformation at a given temperature in the process of forming the thermoformable assembly is dominated by the polymer of the diaphragm(s) (and the metal diaphragm if used); but this requirement can also be achieved if the two polymers have the same minimum forming temperature. For example, if the diaphragm is of the same polymer type as that of the polymer of the thermoformable body but is of higher molecular weight or is thicker than the polymer of thermoformable body, then the higher molecular weight or thicker material of the diaphragm(s) can be used to dominate the process and control the forming.

The minimum forming temperature of a thermoplastic polymer is the temperature at which it can be uniformly stretched by at least 20%. In general such a temperature will be at least 20° C above the glass transition temperature of the polymer and below the decomposition temperature.

When the polymer materials of the thermoformable body and the diaphragm(s) are amorphous polymers, the glass transition temperature of the polymer of the diaphragm(s) should preferably be higher than that of the polymer of the thermoformable body and the forming operation should be carried out above the Tg of the polymer of the diaphragm(s). If both materials are crystalline, the forming operation should preferably be carried out at a temperature above the melting point of the polymer of the diaphragm(s) and the polymer of the thermoformable body should have a melting point lower than that of the polymer of the diaphragm.

Conveniently, the polymeric material used for one or both diaphragms is preferably amorphous, of high molecular weight and, conveniently, lightly cross linked, with broad processing temperature; whilst the matrix polymer is preferably a material having a sharp softening (melting) point and a low viscosity flow at the forming temperature as, for example, in a low molecular weight semi-crystalline polymer.

Usually, the diaphragms are removed from the shaped body following forming, but in some instances one or both diaphragms may be left adhered to the shaped body.

The method of the invention can be used to produce, for example, shaped articles having simple or compound curvature. Simple or single curvature is the shape obtained when a planar member is bent about a linear axis; compound curvature is the shape obtained when a planar member is bent about at least two non-parallel linear axes.

In the method of the invention, the conditions used can be, for example, vacuum, pressure, (differential pressure across the assembly preferably does not exceed about 10 atm) fluid or mechanical, separately or conjointly; the choice of conditions depending to some extent at least on the desired maximum time (the "forming time") for the forming step.

Radiant heat, for example, can be used to heat the thermoformable assembly. When the forming step utilises the application of vacuum, it may be expedient to pre-heat the vacuum adapter to the same or a similar temperature to that of the thermoformable assembly, and in such instances it may be convenient to assemble the thermoformable assembly and vacuum adapter prior to the radiation heating.

The temperature adopted for the tool can be the substantially the same as the temperature at which the thermoformable assembly is to be shaped or it can be at a temperature lower than that temperature, particularly when the assembly is rapidly formed as described and claimed in EP-A-341865. In the latter instance, the temperature difference is preferably not less than 50° C. Thus, for example, the temperature of the shaping surface of the tool can be 100°, 150°, 200° or even more below the temperature of the thermoformable assembly, depending on the temperature of the latter. Where the shaping method is carried out on a high volume basis it may be that the slight temperature loss from successive thermoformable assemblies as they come in contact with the tool is sufficient to maintain the tool temperature at a desired value. However, even where it is necessary to provide some heat so as to maintain the temperature of the tool at the desired value, the heat required is much less than that necessary when the tool is substantially at the forming temperature of the thermoformable assembly.

The body of the thermoformable material is conveniently a thermoformable planar sheet or sheets of composite material. However, the body can, if desired, comprise an uncured thermosettable polymer or precursor therefor. Where the body comprises a thermoplastic polymer it can, for example, be a polypropylene or other polyolefine, polyketones, polyetherketones, polyetherketoneketones, polyetheretherketones, polyesters polyamides and amorphous polymers such as polyethersulphones.

The body can be, for example, in unconsolidated or consolidated form. Thus, it can for instance comprise an unconsolidated stack of plies or a preconsolidated sheet. Consolidation of an unconsolidated stack or maintaining consolidation of a preconsolidated sheet can be effected by applying pressure or other consolidation force, for example by evacuating the space between the diaphragms thereby excluding air from between the unconsolidated plies and from between the body and diaphragms and providing up to, say, 1 atmosphere consolidated pressure to the thermoformable assembly by atmospheric pressure acting on the diaphragms. Optionally, additional consolidation pressure can be provided by increasing the pressure on the diaphragms, for example a pressure up to 2 atmospheres, or even 5 or 10 atmospheres where appropriate.

Whilst it is preferred that the continuous fibres are present in the reinforced thermoformable body as continuous collimated fibres, preferably extending the width and length of the body to be shaped, the invention includes the use of random fibre-reinforced bodies having randomly disposed fibres, providing the fibres are at least 20mm long.

The invention is also useful in producing shaped articles in a method using a plurality of superimposed layers of parallel, collimated, continuous filaments in a thermoplastic matrix, in which the continuous filaments have been severed in predetermined positions, thereby facilitating the ease with which the layers can be formed into a shaped article. The position of the cuts in the continuous filaments can, for example, be predetermined so that on shaping which results in slippage of the layers of filaments, discontinuities in the filaments occur in regions of the article which are reinforced with adjacent continuous fibres and that there is no overlap of adjacent discontinuous regions. One such process of forming articles from prepregs having predetermined severance lines is described in EP-A-202041.

The term "vacuum" as used herein includes air removal to an extent normally adequate for acceptable consolidation of the blank. The vacuum is preferably a gauge pressure of not more than 28 inches mercury, especially not more than 25 inches mercury. The pressures referred to are all gauge pressures. If desired, state of the art evacuated lamination techniques can be incorporated in the sandwich. For example, woven glass 'breather' cloths can be used to facilitate air passage and to accommodate residual air away from the surface region of the blank.

The invention will now be illustrated by reference to the following Examples and will also be described to illustrate the invention by way of example only with reference to the accompanying drawing, in which:-

Figure 1 is a schematic front elevation in cross section of forming apparatus used to form the thermoformable assemblies of the Examples; and

Figure 2 is a schematic cross-section through part of a shaped body made in accordance with Examples 1 and 2.

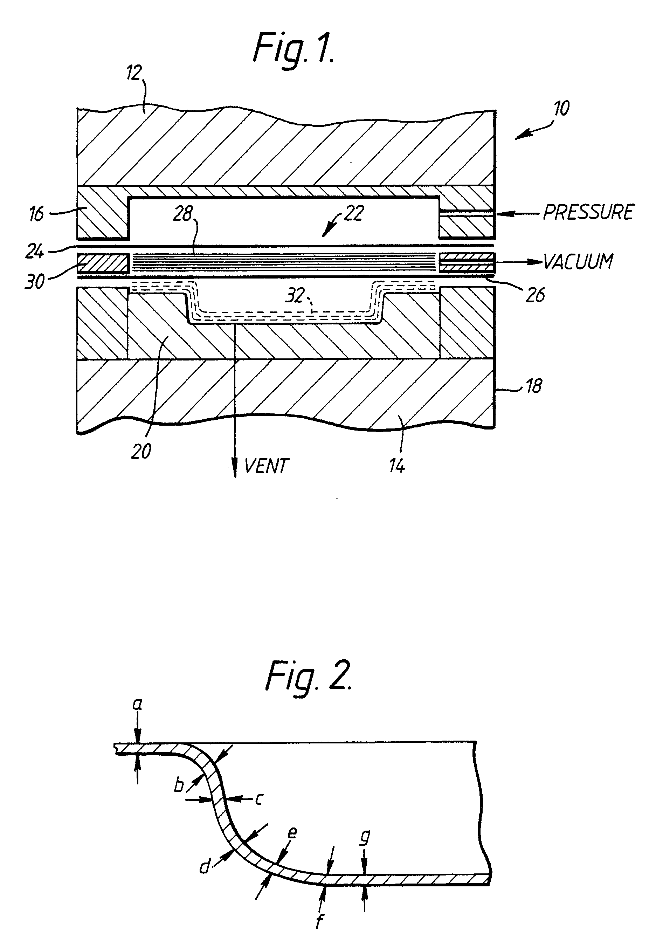

Referring to Figure 1, the apparatus consists of a press 10 having upper and lower heated platens 12, 14 and associated skirts 16, 18, the upper skirt 16 being pressurisable, and, located in the lower skirt 18, a vented female mould 20 defining a simple dish shape. A thermoformable assembly 22 is locatable between the platens. The thermoformable assembly 22 consists of diaphragms 24, 26 between which a thermoformable body 28 being comprised of plies (consolidated or unconsolidated) of continuous fibres in a polymeric matrix are sandwiched, the peripheries of the diaphragms being attached to opposed sides of a peripheral vacuum manifold 30. When the assembly 22 is clamped between the skirts 16, 18, a vacuum is drawn through the manifold 30 to evacuate the volume between the diaphragms, thus providing approximately 14 psi (0.97 bar) consolidation pressure to the body 28. The position occupied by the assembly 22 after forming is indicated in ghost outline at 32.

On the cross-section shown in Figure 2, several locations are marked and further reference to them is made in comparative Example 2.

Example 1

A quasi-isotropic body comprising 8 unconsolidated plies of APC2 which is a polyetheretherketone (PEEK)/carbon fibre prepreg tape available from Imperial Chemical Industries PLC (ICI), each ply having a thickness of 0.127 mm, was placed between two diaphragms one being a sheet of "Upilex R", a polyimide film available from Ube Industries Limited, of 0.127mm thickness and the other being a sheet of FORMALL

4

545 (AA-5083-SPF) available from Alusuisse Swiss Aluminium Ltd, of 1.27mm thickness, each being substantially larger in area than the area of the body. There was thus produced a thermoformable assembly in the form of a "sandwich" for forming. The diaphragms were then positioned respectively on each side of a peripheral vacuum manifold and the assembly was clamped into a forming apparatus (see Figure 1) and a vacuum drawn through the manifold to hold the assembly in a consolidated condition as described above with reference to Figure 1. The assembly was positioned in the apparatus such that the metal diaphragm, ie the stiffer diaphragm, was facing the mould.

The platen heater controls were set for 400°C and were switched on. A dwell period of 40 minutes was allowed once that temperature had been reached. The upper platen was then pressurised to 827kPa at a rate of 34.5kPa/min to form the assembly and a further dwell period of 5 minutes allowed. The apparatus was then cooled from 400°C to 250°C with air circulating through the platens in approximately 30 minutes and then from 250°C to ambient temperature with water circulating through the platens in approximately 15 minutes, following which the formed assembly was removed from the mould.

Examination of the shaped assembly, following removal of the metal diaphragm, showed that the pressure used had been insufficient to fully form the assembly. However, the variation in thickness throughout the radii was no more than 0.1mm.

Example 2 (Comparative)

The procedure of Example 1 was repeated except that the metal diaphragm, ie the stiffer diaphragm, was facing away from the mould.

Examination of the shaped assembly, following removal of the metal diaphragm, showed that the pressure used had been insufficient to fully form the assembly. In this instance, however, the variation in thickness throughout the radii is considerably greater - see Table 1.

TABLE 1

| Point in cross-section at which thickness measured (see Figure 1) | Thickness (mm) |
|---|---|
| a | 0.76 |
| b | 0.89 |
| c | 1.52 |
| d | 1.27 |
| e | 1.02 |
| f | 0.64 |
| g | 0.71 |

Example 3

The procedure of Example 1 was repeated except that the body was 8 plies of HTX/carbon fibre composite, HTX being a developmental polyetheretherketone made by ICI, the plies each being 0.127mm thick and the diaphragms were of 0.127mm thick "Upilex R" and "Upilex S", respectively. The "Upilex S" diaphragm is stiffer than the "Upilex R" diaphragm over the whole of the practical forming temperature range. Also, the forming cycle was modified in that the assembly was made up externally of the apparatus and introduced between the platens which were preheated to 410°C; the vacuum was drawn; a dwell time of 7 minutes was allowed for heat up; the upper platen was pressurised to 690kPa over a 3 minute period; a 1 minute dwell period was allowed; and the assembly was then cooled as quickly as possible to 200°C and removed from the mould.

In this Example, the "Upilex S" diaphragm, ie the stiffer diaphragm, was facing away from the mould.

Examination of the shaped assembly showed that it was well consolidated and had good form with substantially no buckling evident.

## Example 4

The procedure of Example 3 was repeated and examination of the shaped assembly showed that it was well consolidated and had good form with substantially no buckling evident.

## Example 5 (Comparative)

The procedure of Example 3 was repeated except that the "Upilex S" diaphragm, ie the stiffer diaphragm, was facing towards the mould.

Examination of the shaped assembly showed that it was not fully formed and bad buckling had occurred on the "Upilex R" diaphragm side of the assembly.

## Example 6 (Comparative)

The procedure of Example 3 was repeated except that both of the diaphragms were of "Upilex S" sheet.

Examination of the shaped assembly showed that it was not fully formed but had not suffered significant buckling.

## Example 7 (Comparative)

The procedure of Example 3 was repeated except that both of the diaphragms were of "Upilex R" sheet.

Examination of the shaped assembly showed that it was fully formed but that severe buckling had occurred.

## Example 8 (Comparative)

Using apparatus similar to that described with reference to Figure 1, attempts were made to mould a hemispherical article (90mm diameter) from unconsolidated plies of APC2/S4 prepreg material, a PEEK/glass fibre prepreg available from ICI, using two identical diaphragms of 0.127mm thick "Upilex R" film.

The platen heater controls were set for 390°C and were switched on. When the apparatus was at the required temperature, the thermoformable assembly was introduced into the apparatus and a dwell period of 4 minutes was allowed for the assembly to reach a forming temperature of 385°C. The upper platen was then pressurised to 207kPa at a rate of 17kPa/min and then to 620kPa at a rate of 69kPa/min to form the assembly. The apparatus was then cooled from the forming temperature to 140°C at a rate of 2.5°C/min with air circulating through the platens following which the formed assembly was removed from the mould.

The hemispherical articles were severely buckled around their perimeters.

## Example 9

Example 8 was repeated using different numbers of plies laid up in a variety of quasi-isotropic configurations as follows:-

8 plies (+45, 90, -45, 0)s

7 plies (-45, 90, +45, 0, +45, 90, -45)

4 plies (90, 0, 0, 90) + 0.5mm film of PEEK, available from ICI under the trade mark STABAR, on each surface

6 plies (+120, -120, 0, 0, -120, +120)

7 plies (-45, 90, +45, 0, +45, 90, -45) + 0.1mm film of PEEK, available from ICI under the trade mark STABAR, on each surface

6 plies (+120, -120, 0, 0, -120, +120) + 0.25mm film of PEEK, available from ICI under the trade mark STABAR, on each surface

and using a 0.38mm thick "Upilex R" board as the diaphragm remote from the mould, ie the stiffer diaphragm is remote from the mould.

Any buckling of the moulded articles was considerably reduced as compared to the articles made in Example 8 and was within acceptable levels.

## Claims

1. A method of forming a body of thermoformable material containing continuous filaments comprising making a thermoformable assembly of the body and two shaping diaphragms, one located on each side of the body, heating the assembly to a suitable thermoforming temperature, forming the assembly by urging the assembly into contact with a shaping surface of a shaping tool and removing the resultant shaped body from the tool, one of the diaphragms being stiffer than the other of the diaphragms.

2. A method according to claim 1, in which the diaphragm adjacent to the tool is stiffer than the diaphragm remote from the tool.

3. A method according to claim 2, in which the absolute stiffness of the diaphragms is increased to reduce buckling.

4. A method according to claim 1, in which the diaphragm remote from the tool is stiffer than the diaphragm adjacent to the tool.

5. A method according to any one of the preceding claims, in which a loose ply is interposed between one, or preferably both, of the diaphragms and the thermoformable body.

6. A method according to any one of the preceding claims, in which the diaphragms are made of polymeric material.

7. A method according to any one of claims 1 to 5, in which one diaphragm is made of polymeric material and the other diaphragm is made of a superplastically deformable metal.

8. A method according to any one of claims 1 to 5, in which the diaphragms are made of metal.

# Fig. 1.

# Fig. 2.